(19) **Europäisches Patentamt**
**European Patent Office**
**Office européen des brevets**

(11) **EP 4 273 771 A1**

(12) **EUROPEAN PATENT APPLICATION**
published in accordance with Art. 153(4) EPC

(43) Date of publication:
**08.11.2023 Bulletin 2023/45**

(51) International Patent Classification (IPC):
*G06Q 10/06* (2023.01)     *G06Q 10/10* (2023.01)

(21) Application number: **22736868.5**

(22) Date of filing: **07.01.2022**

(52) Cooperative Patent Classification (CPC):
**G06Q 10/06; G06Q 10/10**

(86) International application number:
**PCT/KR2022/000258**

(87) International publication number:
**WO 2022/149891 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.01.2021 KR 20210002872
06.01.2022 KR 20220001983**

(71) Applicant: **Shin, Hyun Chul
Daejeon 34500 (KR)**

(72) Inventor: **Shin, Hyun Chul
Daejeon 34500 (KR)**

(74) Representative: **Gille Hrabal
Partnerschaftsgesellschaft mbB
Patentanwälte
Brucknerstraße 20
40593 Düsseldorf (DE)**

(54) **INDIVIDUAL OR GROUP REPUTATION EVALUATION SYSTEM AND METHOD**

(57) The present invention relates to an individual or group reputation evaluation system and method, comprising: an evaluatee terminal for requesting an evaluation about the social reputation of an evaluatee; a service server for receiving the evaluation request of the evaluatee terminal and analyzing the evaluation result; an evaluator terminal, which accepts the evaluation request of the evaluatee terminal in order to respond to the evaluation provided by the service server; and a viewer terminal, which requests the evaluation result for the user of the evaluatee terminal from the service server, in order to view same.

FIG.1

EP 4 273 771 A1

**Description**

## TECHNICAL FIELD

The present invention relates to a system and method for evaluating reputation of an individual or a group, and more specifically, to a system and method for evaluating reputation including multifaceted abilities such as social capability and the like.

## BACKGROUND ART

Generally, social reputation of an individual or a group is an evaluation mainly based on subjective opinions of individual evaluators. Therefore, evaluation of an individual or a group being evaluated is extremely personal, and thus is difficult to objectify.

Here, evaluation of an individual or a group may be about social capability (social ability or social reputation) such as social credit, temperament, work ability, personality, and the like of the individual or group.

Techniques for evaluating individual work ability are disclosed in Korean Patent Registration No. 10-1998240 (Method for Evaluating and Analyzing of Job Ability by Job Ability Evaluation Model and System of the Same, registered on July 5, 2019), Korean Laid-opened Patent No. 10-2001- 0097430 (Internet Based Customer Annual Salary Valuation System, published on November 8, 2001), and the like.

These conventional evaluation methods use indexes that appear objectively, and may not reflect social reputation of an individual or a group that appears on the other side other than the indexes.

Particularly, although individuals or groups very actively use social network services recently, objective evaluation of reputation behind the scenes, rather than subjective evaluation of posted materials of an individual or a group shown superficially, is required.

## DISCLOSURE

## TECHNICAL PROBLEM

Therefore, the present invention has been made in view of the above problems, and it is an object of the present invention to provide a platform capable of evaluating, by a plurality of evaluators, social ability of an individual or a group being evaluated.

In addition, another object of the present invention is to provide an evaluation system and method capable of providing objective and highly reliable evaluation results.

## TECHNICAL SOLUTION

To accomplish the above objects, according to one aspect of the present invention, there is provided a system for evaluating reputation of an individual or a group, the system comprising: an evaluatee terminal for requesting evaluation of social reputation of an evaluatee; a service server for receiving the evaluation request of the evaluatee terminal, and analyzing an evaluation result; an evaluator terminal for accepting the evaluation request of the evaluatee terminal, and responding to an evaluation provided by the service server; and a viewer terminal for requesting an evaluation result of a user of a specific evaluatee terminal from the service server, and viewing the evaluation result.

According to another aspect of the present invention, there is provided an evaluation method for evaluating reputation of an individual or a group, the method performed in an evaluation system comprising: an evaluatee terminal for requesting evaluation of social reputation of an evaluatee; a service server for receiving the evaluation request of the evaluatee terminal, providing questions for evaluating, and analyzing an evaluation result; an evaluator terminal for accepting the evaluation request of the evaluatee terminal, and responding to an evaluation provided by the service server; and a viewer terminal for requesting an evaluation result of a user of a specific evaluatee terminal from the service server, and viewing the result, wherein the evaluation is accomplished through personality evaluation (PC), reliability evaluation (CR), and potential evaluation (F), which are sub-domains for each of major domains of personal relationship reputation (E) and professional relationship reputation (P), and calculated by assigning a weight in each evaluation.

## ADVANTAGEOUS EFFECTS OF THE INVENTION

The present invention allows social ability or reputation of an individual or a group to be evaluated by a number of evaluators around the evaluatee, and as the social ability or reputation of an individual or a group is analyzed with high reliability through the evaluation by a number of evaluators, and information on the evaluation is provided to individuals or groups who need the information under the authority of the evaluatee, there is an effect of objectively evaluating social reputation of an individual or a group.

In addition, as the present invention allows an evaluatee (evaluation result holder), who desires to use the evaluation valuably, and a result of the evaluation to be used for forming various relationships with the evaluatee, i.e., employment, financial activities, business, marriage, various contracts, and the like, there is an effect of creating a new business model.

In addition, the present invention has an effect of establishing a new social credit standard that complements incompleteness of evaluation of career and credit relying on criminal history, financial credit through financial institutions, inquiry of education level, recommendation letters, resumes, and the like.

## BRIEF DESCRIPTION OF THE DRAWINGS

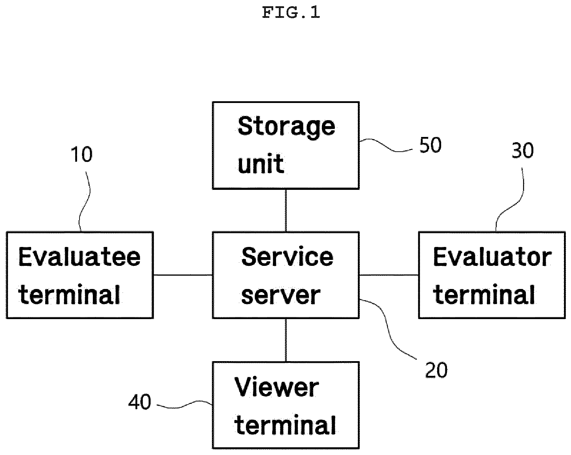

FIG. 1 is a block diagram showing a system for evaluating reputation of an individual or a group according to a preferred embodiment of the present invention.

Description of symbols

    10: Evaluatee terminal 20: Service server
    30: Evaluator terminal 40: Viewer terminal
    50: Storage unit

## BEST MODE FOR INVENTION

Hereinafter, a system and method for evaluating reputation of an individual or a group according to the present invention will be described in detail with reference to the accompanying drawings.

The embodiments of the present invention are provided to more completely explain the present invention to those skilled in the art, and the embodiments described below may be modified in several different forms, and the scope of the present invention is not limited to the embodiments described below. Rather, these embodiments are provided to make the present invention thorough and complete, and to fully convey the spirit of the present invention to those skilled in the art.

Terms used in this specification are used to describe specific embodiments and are not intended to limit the present invention. As used in this specification, singular forms may include plural forms unless the context clearly indicates otherwise. In addition, when used in this specification, "comprise" and/or "comprising" specifies presence of mentioned shapes, numbers, steps, operations, members, elements, and/or groups thereof, and it does not exclude presence or addition of one or more other shapes, numbers, operations, members, elements and/or groups. As used in this specification, the term "and/or" includes any one and all combinations of one or more of the listed items.

Although the terms such as first, second, and the like are used in this specification to describe various members, areas, and/or parts, it is apparent that these members, components, areas, layers, and/or parts are not limited by these terms. These terms do not mean a specific sequence, top or bottom, or superiority or inferiority, and are used only to distinguish one member, area, or part from another member, area, or part. Accordingly, a first member, area, or part described below in detail may refer to a second member, area, or part without departing from the teachings of the present invention.

Hereinafter, embodiments of the present invention will be described with reference to drawings schematically illustrating the embodiments of the present invention. In the drawings, modifications of the illustrated shape may be expected according to, for example, manufacturing techniques and/or tolerances. Therefore, the embodiments of the present invention should not be construed as being limited to the specific shape of an area shown in this specification, but should include, for example, changes in the shape generated in the process of manufacturing.

FIG. 1 is a block diagram showing a system for evaluating reputation of an individual or a group according to a preferred embodiment of the present invention.

Referring to FIG. 1, the present invention is configured to include: an evaluatee terminal 10 for requesting evaluation of social reputation of an evaluatee; a service server 20 for receiving the evaluation request of the evaluatee terminal 10 and analyzing an evaluation result; an evaluator terminal 30 for accepting the evaluation request of the evaluatee terminal 10, and responding to an evaluation provided by the service server 20; a viewer terminal 40 for requesting and viewing an evaluation result for a user of a specific evaluatee terminal 10 from the service server 20; and a storage unit 50 for storing information on the evaluator terminal 30 participating in the evaluation and evaluation information.

Hereinafter, the configuration and operation of the reputation evaluation system of the present invention configured as described above will be described in more detail.

First, as an evaluation process, an evaluatee, who desires evaluation of his or her social reputation, accesses the service server 20 using the evaluatee terminal 10 and requests evaluation.

At this point, the evaluatee terminal 10 may specify an evaluator terminal 30, and the service server 20 allow the evaluator terminal 30 specified by the evaluatee terminal 10 to access the service and conduct evaluation.

The evaluatee terminal 10 is an electronic device, such as a smartphone, a tablet computer, a PC, a laptop computer, or the like, capable of communicating with the service server 20, installing an application provided by the service server 20, and accessing and registering in the service server 20 by executing the application.

A user of the evaluatee terminal 10 accesses the service server 20 and requests his or her social evaluation.

At this point, the evaluatee terminal 10 may specify people around the user as evaluators.

The number of evaluators is equal to or greater than a number specified by the service server 20.

In order to secure objectivity of evaluation results, the service server 20 may set a standard for the minimum number of evaluators. For example, a minimum of 20 or 30 evaluators may be set.

Evaluation data generated by the evaluator terminal 30 are stored in the storage unit 50 of the service server 20, and an evaluation result may be derived from all or selected areas of the data and provided to the viewer terminal 40 with the permission of the evaluatee terminal 10.

When the number of evaluators participating in the evaluation is smaller than the set minimum number of evaluators, the request for viewing may be rejected, or provided as a corrected evaluation result.

In addition, in regard to the qualification of an evaluator, the evaluator may be a human resource officer, a manager, or a colleague who has the authority of evaluation in an organization to which the evaluatee belongs. Further extending, a user of the evaluator terminal 30, i.e., anyone specified under the authority of the evaluatee, such as a family member, relative, friend, teacher, neighbor, or acquaintance on a social network of the user of the evaluator terminal 10, may be an evaluator.

In order to apply different weights according to the classification of the social relationship between the evaluatee and the evaluator to input evaluation values, the evaluators may be subdivided into main categories (nature of relationship) and sub-categories.

The main categories of the social relationship between an evaluatee and an evaluator define whether it is a professional relationship or a personal relationship.

A sub-category of the professional relationship, among the main categories of the social relationship between an evaluatee and an evaluator, defines a type of the relationship, such as an employer, manager, work colleague (simple relationship), work colleague (collaborative relationship), and collaborative relationship in the same field outside the workplace.

In addition, a sub-category of the social relationship between an evaluatee and an evaluator additionally defines the time point (present, past) of the relationship related to each type of the relationship, the duration of the relationship, the frequency of the relationship, and the like.

A sub-category of the personal relationship, among the main categories of the social relationship between an evaluatee and an evaluator, defines a type of the relationship, such as a family member, relative, friend, teacher, neighbor, or acquaintance on a social network.

In addition, a sub-category of the social relationship between an evaluatee and an evaluator additionally defines the time point (present, past) of the relationship related to each type of the relationship, the duration of the relationship, the frequency of the relationship, and the like.

The main categories and sub-categories of the social relationship between an evaluatee and an evaluator are used as a basis for calculating a relationship weight of each evaluator.

The relationship weight may be automatically calculated through comparison of electronic resume forms provided by the service server, in addition to relationship weights calculated by the main categories and sub-categories of the social relationship between an evaluatee and an evaluator.

When an evaluatee is not a natural person (individual) but a group such as a corporation, the type of the relationship, which is a sub-category of the professional relationship among the main categories of the social relationship, may be an executive and an employee of a corresponding group, an executive and an employee of a related group, or the like. When the evaluatee is not a natural person (individual) but a group such as a corporation, the type of the relationship, which is a sub-category of the personal relationship among the main categories of the social relationship, may be a client, a stock holder, or the like. In addition, a sub-category of the social relationship between an evaluatee and an evaluator may additionally define the time point (present, past) of making the relationship related to each type of the relationship, the duration of the relationship, the frequency of the relationship, and the like.

The main categories and sub-categories of the social relationship between an evaluatee and an evaluator are used as a basis for calculating a relationship weight of each evaluator.

Qualification of an evaluator specifies a category, and at least one evaluator is assigned to each category, or when there is no evaluator in a category, input of a reason may be requested.

When the evaluatee terminal 10 requests evaluation, the evaluation is requested by selecting evaluatees who satisfy the minimum number of evaluators and the category.

Input data of the evaluators stored in the service server 20 may be used to analyze evaluation results of each evaluator category for the evaluatee, or may be used to calculate a comprehensive evaluation result by applying a different weight to each evaluator category.

The service server 20 displays information on the evaluatee on the evaluator terminals 30 requested by the evaluatee terminal 10, and confirms whether or not to participate in the evaluation.

At this point, the intention may be confirmed by asking the evaluator terminal 30 whether or not to participate in the evaluation of the evaluatee using a dedicated application or through SMS or e-mail, and a procedure needed for the evaluation may be proceeded by confirming evaluator terminals 30 that desire to participate in the evaluation.

The service server 20 stores information on the evaluator terminals 30 participating in the evaluation and evaluation information in the storage unit 50.

Basically, the evaluatee terminal 10 has a right to view the evaluation result analyzed based on the stored evaluation information. At this point, the evaluation information provided to the evaluatee and a viewer specified by the evaluatee may be limited to information on a specific evaluation area or comprehensive information, and viewing of evaluation information made by each evaluator may be excluded.

In addition to the service of analyzing and viewing using the evaluation information stored in the storage unit 50, the service server 20 may generate a blockchain ledger in response to the evaluation request of the evaluatee terminal 10.

The blockchain ledger basically includes information on the evaluatee and the evaluator.

The recorded ledger may be distributed to systems constituting a private blockchain.

Basically, the evaluatee terminal 10 has a right to view the stored blockchain ledger, and may be performed by the service server 20 to prevent tampering and to confirm that the evaluation information is not tampered.

The service server 20 transmits questions for evaluating the reputation for evaluating the evaluatee to the evaluator terminals 30 that have determined to participate in the evaluation through a means such as an application, SMS, e-mail, or the like.

The questions for evaluating the reputation may include questions or question groups that can evaluate fairness, trust, honesty, sincerity, concentration/achievement on goals, affinity, collaboration ability, altruism, future potential, and the like.

The social capability of an individual may include an ability related to his/her job within a group, as well as social ability evaluated by others. For example, in the case of a human resource officer, a manager, or the like, for whom fair evaluation of others is regarded as the essential ability, since fair evaluation of others by himself/herself, in addition to evaluation by others, is one of social abilities, the social capability may also include fairness of evaluation by others and evaluation of others. It is not limited to a specific role within a group, and may be included in evaluation of sociality of all users having an account.

The evaluator answers the questions for evaluating the reputation using the evaluator terminal 30 and returns the answers to the service server 20.

The service server 20 confirms and analyzes the returned answers to the questions for evaluating the reputation, and evaluates social reputation of the evaluator.

At this point, the service server 20 may apply factors for correcting the evaluation result.

The correction factors may largely include a qualification factor of an evaluator and a reliability factor of data.

The qualification factor of an evaluator may be the nature of relationship, the duration of relationship, the evaluation pattern of the evaluator, and the evaluation score factor of the evaluator himself/herself.

At this point, reputation data of the evaluatee input by the individual evaluator may be applied to calculation of a reputation result of the evaluatee as a differentiated weight is applied according to the qualification factor of a corresponding evaluator.

The nature of relationship may be divided into a personal friend, a family member, a mixture of personal relationship and professional relationship, and a pure business relationship.

In addition, the amount of data and the homogeneity of data may be used for reliability of data.

In addition, reliability of data may be corrected by a differentiated weight based on the data retention period according to the generation time point of individual evaluation data.

The detailed description of reputation evaluation of the present invention is as follows.

First, calculation of the reputation evaluation is divided into a sub-domain and a major domain.

The major domain may be divided into personal relationship reputation (E) and professional relationship reputation (P), and the sub-domain may be divided into evaluation factors such as personality & character (or organization culture and governance characteristics of a group when the evaluatee is a group such as a corporation), reliability, potential, and the like.

The sub-domain may be subdivided into $E_{PC}$, $E_{CR}$, $E_F$, $P_{PC}$, $P_{CR}$, and $P_F$. Here, the attributes of the sub-domain marked with a subscript may mean evaluation factors such as PC (personality & character), CR (reliability), and F (potential).

Evaluation of the sub-domain is configured of n questions, and each evaluator may assign an evaluation value to the questions of the sub-domain belonging to one of the major domains according to the relationship with the evaluatee.

Specifically, the evaluator may assign the personality evaluation value ($E'_{PC}$), reliability evaluation value ($E'_{CR}$), and potential evaluation value ($E'_F$), which are evaluation values of the questions belonging to the sub-domain of the domain of personal relationship reputation (E). In addition, the evaluator may assign the personality evaluation value ($P'_{PC}$), reliability evaluation value ($P'_{CR}$), and potential evaluation value ($P'_F$), which are evaluation values of the questions belonging to the sub-domain of the domain of professional relationship reputation (P).

At this point, when it is assumed that the weight of the k-th question belonging to each sub-domain is $W_{EPCk}$, $W_{ECRk}$, $W_{EFk}$, $W_{PPRk}$, $W_{PCRk}$, and $W_{PFk}$, evaluation values input by the evaluator for each question for the evaluatee may derive evaluation values of the sub-domain such as $E_{PC}$, $E_{CR}$, $E_F$, $P_{PC}$, $P_{CR}$, $P_F$, and the like through a mathematical process combined with the weight of each question.

For example, the evaluation values of the sub-domain configured of n questions may be expressed as shown in Equation 1.

[Equation 1]

$$E'_{PC}W = \frac{\sum_{k=1}^{n}(E'_{PCk} \times W_{EPCk})}{\sum_{k=1}^{n} W_{EPCk}}$$

$$E'_{CR}W = \frac{\sum_{k=1}^{n}(E'_{CRk} \times W_{ECRk})}{\sum_{k=1}^{n} W_{ECRk}}$$

$$E'_{F}W = \frac{\sum_{k=1}^{n}(E'_{Fk} \times W_{EFk})}{\sum_{k=1}^{n} W_{EFk}}$$

$$P'_{PC}W = \frac{\sum_{k=1}^{n}(P'_{PCk} \times W_{PPCk})}{\sum_{k=1}^{n} W_{PPCk}}$$

$$P'_{CR}W = \frac{\sum_{k=1}^{n}(P'_{CRk} \times W_{PCRk})}{\sum_{k=1}^{n} W_{PCRk}}$$

$$P'_{F}W = \frac{\sum_{k=1}^{n}(P'_{Fk} \times W_{PFk})}{\sum_{k=1}^{n} W_{PFk}}$$

In Equation 1, weights $W_{EPCk}$, $W_{ECRk}$, $W_{EFk}$, $W_{PPRk}$, $W_{PCRk}$, and $W_{PFk}$ of the 'k-th question are assumed to be values randomly assigned according to the importance of each question constituting the sub-domain.

In addition, when the number of responded items for the subdivided sub-domain is m for each element, and the k-th response value is $a_k$ in Equation 1, the score of the n-th element may be expressed as shown in Equation 2.

[Equation 2]

$$E'pc_n = \frac{\sum_{k=1}^{m_n} a_k}{m_n}$$

In addition to the 'weights of questions' $W_{EPCk}$, $W_{ECRk}$, $W_{EFk}$, $W_{PPRk}$, $W_{PCRk}$, and $W_{PFk}$ shown in the above equation, various weights may be applied to the response values of the evaluator.

For example, the 'weight of relationship ($W_{f1}$)' specified by the attribute, duration, and frequency of the relationship between the evaluator and the evaluatee, and the 'weight of evaluator qualification ($W_{f3}$)' specified by the reputation of the evaluator may be applied to the statistical reflection ratio of the response values.

$W_{f1}$ is a weight subdivided according to the 'level of relationship (LR)', 'duration of relationship (DR)', and 'frequency of relationship (FR)' in the major domains of the personal relationship reputation (E) and the professional relationship reputation (P).

The indexes of LR, DR, and FR have different values between 0 and 1 according to the detailed relationship classification of each index. The value $W_{f1}$ derived therefrom may be expressed as shown in Equation 3.

[Equation 3]

$$W_{f1} = LR \times DR \times FR \quad (0.0 \leq W_{f1} \leq 1.0)$$

In addition, as another weight, the 'weight of time $(W_{f2})$' may be additionally applied to $E'_{PC}$, $E'_{CR}$, $E'_F$, $P'_{PC}$, $P'_{CR}$, and P'F.

The final reputation information dataset input by the evaluator may be reflected in the overall result with a different importance according to the period elapsed after the input. As reputation of an evaluatee may vary over time, past reputation values and latest reputation values may be assigned with a different importance in the overall result.

For example, when it is assumed that the current reputation value has the maximum weight ($W_{f2}$ = 1) according to the input time point of the reputation value, and the proportion of the reputation value calculated as 9 years or earlier (or belonging to the year of 10th anniversary or earlier, y) is 1/10 ($W_{f2}$ = 0.1), which is the minimum value, the 'weight of time $(W_{f2})$' for each question of the sub-domain may be calculated through Equation 4 shown below.

[Equation 4]

$$W_{f2} = \max\left(1 - \frac{d}{365 \times y}, z\right), \quad (0.0 < W_{f2} \leq 1.0)$$

In Equation 4, d denotes the number of days elapsed from the input date of the reputation value until the analysis date. In the above equation, y denotes the number of years taken for the weight of the time of the reputation value to become a randomly specified minimum value over time. In the above equation, z denotes an arbitrary minimum weight value.

That is, when y is set to 10 years in the equation, the 'weight of time $(W_{f2})$' is reduced by a ratio of 1/3650 daily from the date of input. At this point, the 'weight of time $(W_{f2})$' for the evaluation value becomes z at the time point when 9 years or more have passed, and $W_{f2}$ after this time point is fixed to the weight of z, which is the minimum weight. The elapsed time for adjustment of weight and the minimum weight value may be randomly specified.

For example, z may be a real number greater than 0 and smaller than or equal to 1.

As another weight, 'evaluator's reputation weight $(W_{f3})$' determined by the reputation possessed by the evaluator may be additionally applied. In this case, evaluation information input by an evaluator with a high reputation is regarded as being more important than evaluation information input by an evaluator with a low reputation.

For example, when the evaluation value of an evaluator in a specific sub-domain is x and the scale of the evaluation value is 10, $W_{f3}$ of the evaluator in the sub-domain may be x/10 or an arbitrary value proportional to x/10, and $W_{f3}$ may be a real number greater than 0 and equal to or smaller than 1.

Although $W_{f1}$, $W_{f2}$, and $W_{f3}$ shown in the above equation may be processed in an evaluation without regard to the sub-domains and the number of questions, when j evaluators input evaluation values for one evaluatee, as many as j different $W_{f1}$, $W_{f2}$, and $W_{f3}$ may be generated. $W_{f1}$, $W_{f2}$, and $W_{f3}$ are weights related to classification of evaluator's relationship, evaluator's reputation, and a time point of an evaluation value generated by the evaluators, and a weight synthesis $W_T$ combining the weights may be defined. In the evaluation of one evaluatee, j evaluators generate as many as j types of $W_T$.

An equation for calculating the weight synthesis is described in Equation 5.

[Equation 5]

$$W_T = W_{f1} \times W_{f2} \times W_{f3}$$

The sum $N_{WT}$ of weights related to each evaluator and evaluator's evaluation time point may be regarded as the size of an actual evaluation group, and may be expressed as shown in Equation 6.

[Equation 6]

$$N_{WT} = \sum_{i=1}^{j} W_{Ti}$$

When j evaluators input evaluation values of a sub-domain configured of the n questions, E'$_{pc}$W, E'$_{cr}$W, E'$_f$W, P'$_{pc}$W, P'$_{cr}$W, and P'$_f$W may be generated as many as j for each sub-domain. Final evaluation values of E$_{pc}$, E$_{pr}$, E$_f$, P$_{pc}$, P$_{cr}$, and P$_f$ for each sub-domain may be obtained by dividing a sum of the values obtained by applying the weight W$_T$ of each evaluator to these values for each sub-domain by N$_{WT}$, which is the size of an actual evaluation group.

The final equation for calculating the weighted evaluation value may be expressed as shown in Equation 7.

[Equation 7]

$$E_{PC} = \frac{\sum_{i=1}^{j}(E'_{PC}W_i \times W_{Ti})}{N_{WT}}$$

$$E_{CR} = \frac{\sum_{i=1}^{j}(E'_{CR}W_i \times W_{Ti})}{N_{WT}}$$

$$E_F = \frac{\sum_{i=1}^{j}(E'_F W_i \times W_{Ti})}{N_{WT}}$$

$$P_{PC} = \frac{\sum_{i=1}^{j}(P'_{PC}W_i \times W_{Ti})}{N_{WT}}$$

$$P_{CR} = \frac{\sum_{i=1}^{j}(P'_{CR}W_i \times W_{Ti})}{N_{WT}}$$

$$P_F = \frac{\sum_{i=1}^{j}(P'_F W_i \times W_{Ti})}{N_{WT}}$$

j evaluators have different weights W$_{f1}$, W$_{f2}$, and W$_{f3}$ for an evaluatee, and the evaluation values E$_{PC}$, E$_{CR}$, E$_F$, P$_{PC}$, P$_{CR}$, and P$_F$ of the sub-domains configured of n questions of different weights may be add with arbitrary weights of calculation values E and P of the major domain.

Here, the evaluation values E$_{PC}$, E$_{CR}$, E$_F$, P$_{PC}$, P$_{CR}$, and P$_F$ of the sub-domains are an example of implementation, and other sub-domains may be added or omitted.

A result of each evaluation domain corrected as described above or a result of comprehensive evaluation is provided to the viewer terminal 40 specified by the evaluatee terminal 10.

Specification of the viewer terminal 40 by the evaluatee is initiated by a request of the viewer terminal 40 or the evaluatee terminal 10.

The evaluatee has a right to request and approve viewing the evaluation information for the viewer terminal 40.

The service server 20 mediates a request for viewing reputation information of the evaluatee by the evaluatee or a viewer and approval of viewing the information by the evaluatee, and transmits information on the result of each evaluation domain or information on the result of comprehensive evaluation specified by approval the evaluatee to the specified viewer.

The viewer terminal 40 may be a company, a government office, a bank, a school, an individual, or the like, and may proceed with works such as recruitment, agreement, loan, or the like in consideration of the social evaluation of the evaluatee.

The present invention may prevent leakage of personal information by preventing manipulation of evaluation results using blockchain techniques and limiting access of non-authorized users.

It is obvious to those skilled in the art that the present invention is not limited to the above embodiments and may be implemented to be variously changed or modified within the scope of the technical gist of the present invention.

**INDUSTRIAL APPLICABILITY**

The present invention relates to a technique capable of performing social ability and evaluation of an individual or a group using natural laws, and has industrial applicability.

**Claims**

1. An evaluation system comprising:

   an evaluatee terminal for requesting evaluation of social reputation of an evaluatee;
   a service server for receiving the evaluation request of the evaluatee terminal, and analyzing an evaluation result;
   an evaluator terminal for accepting the evaluation request of the evaluatee terminal, and responding to an evaluation provided by the service server; and
   a viewer terminal for requesting an evaluation result of a user of a specific evaluatee terminal from the service server, and viewing the evaluation result, wherein
   the evaluation is accomplished through some or all of personality evaluation (PC), reliability evaluation (CR), and potential evaluation (F), which are sub-domains for each of major domains of personal relationship reputation (E) and professional relationship reputation (P), and calculated as shown in Equation 1 by assigning a weight in each evaluation.

   [Equation 1]

   $$E_{PC} = \frac{\sum_{i=1}^{j}(E'_{PC}W_i \times W_{Ti})}{N_{WT}}$$

   $$E_{CR} = \frac{\sum_{i=1}^{j}(E'_{CR}W_i \times W_{Ti})}{N_{WT}}$$

   $$E_F = \frac{\sum_{i=1}^{j}(E'_F W_i \times W_{Ti})}{N_{WT}}$$

   $$P_{PC} = \frac{\sum_{i=1}^{j}(P'_{PC}W_i \times W_{Ti})}{N_{WT}}$$

   $$P_{CR} = \frac{\sum_{i=1}^{j}(P'_{CR}W_i \times W_{Ti})}{N_{WT}}$$

   $$P_F = \frac{\sum_{i=1}^{j}(P'_F W_i \times W_{Ti})}{N_{WT}}$$

   E'W and P'W denote a reputation value of personal relationship and a reputation value of professional relationship, respectively, $W_T$ denotes a weight synthesis other than questions, j denotes the number of evaluator terminals, and N denotes the number of evaluation groups.

2. The system according to claim 1, wherein the reputation value E'W of the personal relationship and the reputation value P'W of the professional relationship are calculated by including all or some of Equation 2 shown below.

[Equation 2]

$$E'_{PC}W = \frac{\sum_{k=1}^{n}(E'_{PCk} \times W_{E_{PC}k})}{\sum_{k=1}^{n} W_{E_{PC}k}}$$

$$E'_{CR}W = \frac{\sum_{k=1}^{n}(E'_{CRk} \times W_{E_{CR}k})}{\sum_{k=1}^{n} W_{E_{CR}k}}$$

$$E'_{F}W = \frac{\sum_{k=1}^{n}(E'_{Fk} \times W_{E_{F}k})}{\sum_{k=1}^{n} W_{E_{F}k}}$$

$$P'_{PC}W = \frac{\sum_{k=1}^{n}(P'_{PCk} \times W_{P_{PC}k})}{\sum_{k=1}^{n} W_{P_{PC}k}}$$

$$P'_{CR}W = \frac{\sum_{k=1}^{n}(P'_{CRk} \times W_{P_{CR}k})}{\sum_{k=1}^{n} W_{P_{CR}k}}$$

$$P'_{F}W = \frac{\sum_{k=1}^{n}(P'_{Fk} \times W_{P_{F}k})}{\sum_{k=1}^{n} W_{P_{F}k}}$$

n denotes the number of questions for evaluating the reputation, and W denotes a weight for each question.

**3.** The system according to claim 1, wherein the weight synthesis $W_T$ is defined as all or some of Equation 3 shown below.

[Equation 3]

$$W_T = W_{f1} \times W_{f2} \times W_{f3}$$

$W_{f1}$ denotes a weight for relationship, $W_{f2}$ denotes a weight for a relationship time between an evaluator and an evaluatee, and $W_{f3}$ denotes a weight for reputation of the evaluator evaluating the evaluatee.

**4.** An evaluation method performed in an evaluation system comprising:

an evaluatee terminal for requesting evaluation of social reputation of an evaluatee;
a service server for receiving the evaluation request of the evaluatee terminal, providing questions for evaluating the reputation, and analyzing an evaluation result;
an evaluator terminal for accepting the evaluation request of the evaluatee terminal, and responding to an evaluation provided by the service server; and
a viewer terminal for requesting an evaluation result of a user of a specific evaluatee terminal from the service server, and viewing the evaluation result, wherein
the evaluation is accomplished through personality evaluation (PC), reliability evaluation (CR), and potential evaluation (F), which are sub-domains for each of major domains of personal relationship reputation (E) and professional relationship reputation (P), and calculated as all or some of Equation 4 shown below by assigning a weight in each evaluation.

[Equation 4]

$$E_{PC} = \frac{\sum_{i=1}^{j}(E'_{PC}W_i \times W_{Ti})}{N_{WT}}$$

$$E_{CR} = \frac{\sum_{i=1}^{j}(E'_{CR}W_i \times W_{Ti})}{N_{WT}}$$

$$E_F = \frac{\sum_{i=1}^{j}(E'_F W_i \times W_{Ti})}{N_{WT}}$$

$$P_{PC} = \frac{\sum_{i=1}^{j}(P'_{PC}W_i \times W_{Ti})}{N_{WT}}$$

$$P_{CR} = \frac{\sum_{i=1}^{j}(P'_{CR}W_i \times W_{Ti})}{N_{WT}}$$

$$P_F = \frac{\sum_{i=1}^{j}(P'_F W_i \times W_{Ti})}{N_{WT}}$$

E'W and P'W denote a reputation value of personal relationship and a reputation value of professional relationship, respectively, $W_T$ denotes a weight synthesis other than questions, j denotes the number of evaluator terminals, and N denotes the number of evaluation groups.

5. The method according to claim 4, wherein the reputation value E'W of the personal relationship and the reputation value P'W of the professional relationship are calculated as all or some of Equation 5 shown below.

[Equation 5]

$$E'_{PC}W = \frac{\sum_{k=1}^{n}(E'_{PCk} \times W_{E_{PC}k})}{\sum_{k=1}^{n}W_{E_{PC}k}}$$

$$E'_{CR}W = \frac{\sum_{k=1}^{n}(E'_{CRk} \times W_{E_{CR}k})}{\sum_{k=1}^{n}W_{E_{CR}k}}$$

$$E'_F W = \frac{\sum_{k=1}^{n}(E'_{Fk} \times W_{E_F k})}{\sum_{k=1}^{n}W_{E_F k}}$$

$$P'_{PC}W = \frac{\sum_{k=1}^{n}(P'_{PCk} \times W_{P_{PC}k})}{\sum_{k=1}^{n}W_{P_{PC}k}}$$

$$P'_{CR}W = \frac{\sum_{k=1}^{n}(P'_{CRk} \times W_{P_{CR}k})}{\sum_{k=1}^{n}W_{P_{CR}k}}$$

$$P'_F W = \frac{\sum_{k=1}^{n}(P'_{Fk} \times W_{P_F k})}{\sum_{k=1}^{n}W_{P_F k}}$$

n denotes the number of questions for evaluating the reputation, and W denotes a weight for each question.

6. The method according to claim 4, wherein the weight synthesis $W_T$ is defined as all or some of Equation 6 shown below.

[Equation 6]

$$W_T = W_{f1} \times W_{f2} \times W_{f3}$$

$W_{f1}$ denotes a weight for relationship, $W_{f2}$ denotes a weight for a relationship time between an evaluator and an evaluatee, and $W_{f3}$ denotes a weight for reputation of the evaluator evaluating the evaluatee.

FIG.1

## INTERNATIONAL SEARCH REPORT

| International application No. |
| --- |
| **PCT/KR2022/000258** |

| A. CLASSIFICATION OF SUBJECT MATTER |
| --- |
| **G06Q 10/06**(2012.01)i; **G06Q 10/10**(2012.01)i |
| According to International Patent Classification (IPC) or to both national classification and IPC |

| B. FIELDS SEARCHED |
| --- |
| Minimum documentation searched (classification system followed by classification symbols) |
| G06Q 10/06(2012.01); G06Q 10/10(2012.01); G06Q 50/00(2006.01); G06Q 50/10(2012.01); G06Q 50/10(2012.01); G06Q 50/20(2012.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 평판(reputation), 평가(evaluation), 신뢰성(reliability), 서버(server), 가중치(weight) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | KR 10-2016-0132675 A (SUH, Jang Won) 21 November 2016 (2016-11-21)<br>See paragraphs [0016]-[0080]; and figures 1-6. | 1-6 |
| A | KR 10-2013-0122346 A (CHUNG ANG UNIVERSITY INDUSTRY ACADEMIC COOPERATION FOUNDATION) 07 November 2013 (2013-11-07)<br>See paragraphs [0053]-[0115]; and figures 1-7. | 1-6 |
| A | KR 10-2011-0087636 A (KONKUK UNIVERSITY INDUSTRIAL COOPERATION CORP) 03 August 2011 (2011-08-03)<br>See paragraphs [0069]-[0131]; and figures 1-8. | 1-6 |
| A | KR 10-2003-0094749 A (KOREA ACADEMY CONSULTING CO., LTD.) 18 December 2003 (2003-12-18)<br>See paragraphs [0008]-[0038]; and figures 1-11b. | 1-6 |

✓ Further documents are listed in the continuation of Box C.    ✓ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 April 2022** | **15 April 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2022/000258** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2018-0104897 A (ELECTRONICS AND TELECOMMUNICATIONS RESEARCH INSTITUTE) 27 September 2018 (2018-09-27) See paragraphs [0032]-[0058]; and figures 1-4. | 1-6 |

Form PCT/ISA/210 (second sheet) (July 2019)

**INTERNATIONAL SEARCH REPORT**
Information on patent family members

International application No.

**PCT/KR2022/000258**

| Patent document cited in search report | | | Publication date (day/month/year) | Patent family member(s) | | | Publication date (day/month/year) |
|---|---|---|---|---|---|---|---|
| KR | 10-2016-0132675 | A | 21 November 2016 | KR | 10-2017-0013966 | A | 07 February 2017 |
| KR | 10-2013-0122346 | A | 07 November 2013 | None | | | |
| KR | 10-2011-0087636 | A | 03 August 2011 | KR | 10-1206863 | B1 | 30 November 2012 |
| | | | | KR | 10-2012-0106667 | A | 26 September 2012 |
| KR | 10-2003-0094749 | A | 18 December 2003 | KR | 10-0440615 | B1 | 19 July 2004 |
| KR | 10-2018-0104897 | A | 27 September 2018 | None | | | |

Form PCT/ISA/210 (patent family annex) (July 2019)

**EP 4 273 771 A1**

**Patent documents cited in the description**

- KR 101998240

- KR 1020010097430